# EUROPEAN PATENT APPLICATION

(11) **EP 1 739 590 A1**
(43) Date of publication of application: **03.01.2007**
(21) Application number: 06101579.8
(22) Date of filing: 13.02.2006
(51) Int. Cl.: G06F 21/00

(54) **Image forming apparatus**

(30) Priority: 29.06.2005 JP 2005189663
(71) Applicant: KONICA MINOLTA BUSINESS TECHNOLOGIES, INC., Tokyo 100-0005 (JP)
(72) Inventor: Ishii, Hiroshi, Tokyo 192-8505 (JP)
(74) Representative: Henkel, Feiler & Hänzel

(57) **Abstract**

Disclosed is an image forming apparatus including: a storing section for storing electronic data for printout and an electronic signature attached to the electronic data; an image forming section for printing the stored electronic data on a predetermined recording medium; and a control section for decrypting the stored electronic signature, for determining whether originality in the electronic data is secured based on a decryption result, and for controlling the image forming section based on the determination result.

## Description

### BACKGROUND OF THE INVENTION

### 1. Field of the Invention

The present invention relates to an image forming apparatus. Particularly, the present invention relates to an image forming apparatus for forming an image by receiving electronic data to which an electronic signature is attached.

### 2. Description of Related Art

Conventionally, a falsification detection technology using an electronic signature technology such as PKI (Public Key Infrastructure) is in widespread use for securing originality of computerized documents. Further, services capable of verifying originality of data are offered using a certificate issued by a third party such as a certificate authority.

Further, there is proposed an apparatus realizing prevention of document falsification as follows. That is, when printing and issuing various documents, the apparatus collectively prints and issues time stamp information created from a standard time, a two-dimensional code obtained by two-dimensionally encoding print data, a one-way function calculated from the print data and a two-dimensional code obtained by encrypting information used for reality check by a third party such as a certificate authority and by two-dimensionally encoding the information (see JP-2003-323512 A hereinafter referred to as Patent Document 1).

There may be a case where the above-described apparatus prints, in a paper medium, electronic data to which an electronic signature is attached. In this case, a personal computer, a work station or a server (hereinafter, referred to as a personal computer) obtains from a certificate authority a public key corresponding to the electronic signature attached to the electronic data as a print object, checks originality of the electronic data based on the public key and then, transmits the electronic data to a printer to print them in the paper medium. Therefore, there is a problem that the user is interrupted by complicated printing.

Further, the apparatus of the Patent Document 1 is capable of scanning the electronic signature printed on the paper medium as the two-dimensional code and capable of requiring the verification of the electric signature to a third party. However, the apparatus has difficulty in handling an electronic signature other than the commonly used two-dimensionally encoded electronic signature. Therefore, the apparatus cannot solve the above-described problems. Further, it is difficult for the apparatus itself to verify the electronic signature.

### SUMMARY

In view of the foregoing, it is an object of the present invention to provide an image forming apparatus capable of easily performing the printing of image data to which an electronic signature is attached.

In order to solve the problem, in accordance with the image forming apparatus reflecting one embodiment of the invention, the image forming apparatus, comprises:
a storing section for storing electronic data for printout and an electronic signature attached to the electronic data;
an image forming section for printing the stored electronic data on a predetermined recording medium; and
a control section for decrypting the stored electronic signature, for determining whether originality in the electronic data is secured based on a decryption result, and for controlling the image forming section based on the determination result.

In the above embodiment, because whether originality in the electronic data as a print object is secured is determined, and the image forming section is controlled based on the determination result, it is possible to easily perform the printing of the electronic data.

Preferably, the control section allows information relating to the determination result to be printed on the recording medium.

In the above embodiment, because the information relating to the determination result is printed on the recording medium, it is possible to easily check the originality determination results of the electronic data.

Preferably, the control section allows the information relating to the determination result to be superposed on the electronic data and to be printed on the recording medium.

In the above embodiment, because the information relating to the determination result is superposed on the electronic data and is printed on the recording medium, it is possible to easily check the contents of the electronic data as well as the originality determination results of the electronic data.

Preferably, the control section allows information relating to the electronic signature to be printed on the recording medium when it is determined that the originality is secured.

In the above embodiment, because the information relating to the electronic signature is printed on the recording medium, it is possible to easily check the information relating to the electronic signature.

Preferably, the apparatus further comprises:
an obtaining section for externally obtaining decryption key information for decrypting the electronic signature,
wherein:
the control section decrypts the electronic signature based on the obtained decryption key information.

In the above embodiment, it is possible to externally obtain the decryption key information for decrypting the electronic signature.

In accordance with the image forming apparatus reflecting one embodiment of the invention, the image forming apparatus, comprises:
a storing section for storing original data, an electronic signature attached to the original data and electronic data for printout, which is created based on the original data;
an image forming section for printing out the stored electronic data on a predetermined recording medium; and
a control section for decrypting the stored electronic signature, for determining whether originality in the original data is secured based on a decryption result, and for controlling the image forming section based on the determination result.

In the above embodiment, because whether originality in the electronic data as a print object is secured is determined based on the original data used as the basis for creation of the electronic data and based on the electronic signature attached to the original data, and the image forming section is controlled based on the determination result, it is possible to easily perform the printing of the electronic data.

Preferably, the control section allows information relating to the determination result to be printed on the recording medium.

In the above embodiment, because the information relating to the determination result is printed on the recording medium, it is possible to easily check the originality determination results of the electronic data.

Preferably, the control section allows the information relating to the determination result to be superposed on the electronic data and to be printed on the recording medium.

In the above embodiment, because the information relating to the determination result is superposed on the electronic data and is printed on the recording medium, it is possible to easily check the contents of the electronic data as well as the originality determination results of the electronic data.

Preferably, the control section allows information relating to the electronic signature to be printed on the recording medium when it is determined that the originality is secured.

In the above embodiment, because the information relating to the electronic signature is printed on the recording medium, it is possible to easily check the information relating to the electronic signature.

Preferably, the apparatus further comprises:
an obtaining section for externally obtaining decryption key information for decrypting the electronic signature,
wherein:
the control section decrypts the electronic signature based on the obtained decryption key information.

In the above embodiment, it is possible to externally obtain the decryption key information for decrypting the electronic signature.

### BRIEF DESCRIPTION OF THE DRAWINGS

The present invention will become more fully understood from the detailed description given below and the accompanying drawings which are given by way of illustration only, and thus are not intended to limit the scope of the invention, and
wherein:
FIG. 1 shows a configuration of an image processing system;
FIG. 2 shows an internal configuration of an MFP;
FIG. 3 shows an internal configuration of a personal computer;
FIG. 4 shows an internal configuration of a CA server;
FIG. 5 shows an internal configuration of a TSA server;
FIG. 6 is a flow chart showing procedures of an electronic signature attaching process;
FIG. 7 is a flow chart showing procedures of an electronic signature attaching process;
FIG. 8 is a flow chart showing procedures of an image forming process;
FIG. 9 is a flow chart showing procedures of an electronic signature decryption process;
FIG. 10 is a flow chart showing procedures of a time stamp decryption process; and
FIG. 11 shows one example of information contained in electronic data and time stamp recorded in a recording medium.

### PREFERRED EMBODIMENTS OF THE INVENTION

Preferred embodiments for performing the present invention are described in detail below with reference to the accompanying drawings. However, the scope of the present invention is not limited to the examples shown in figures.

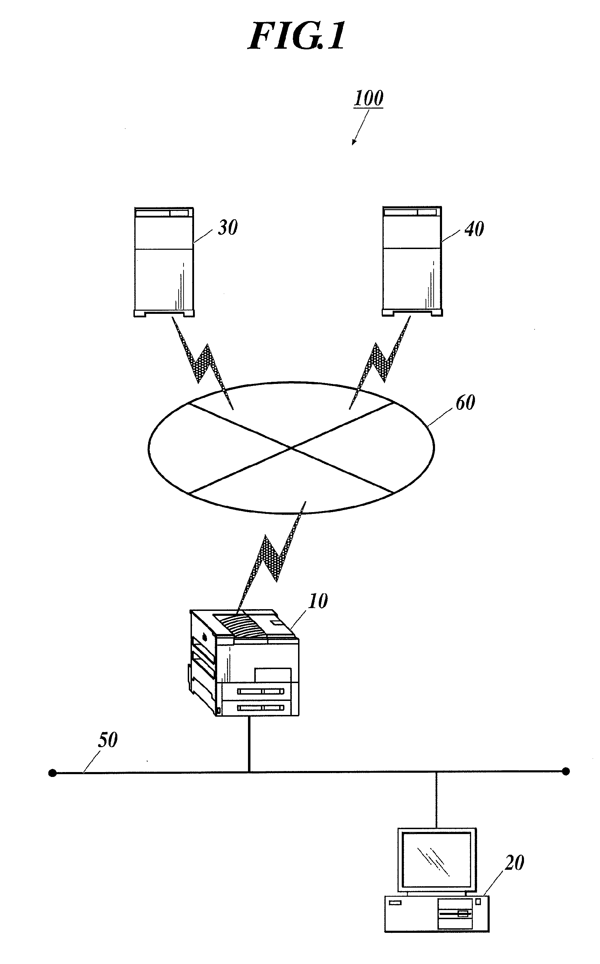

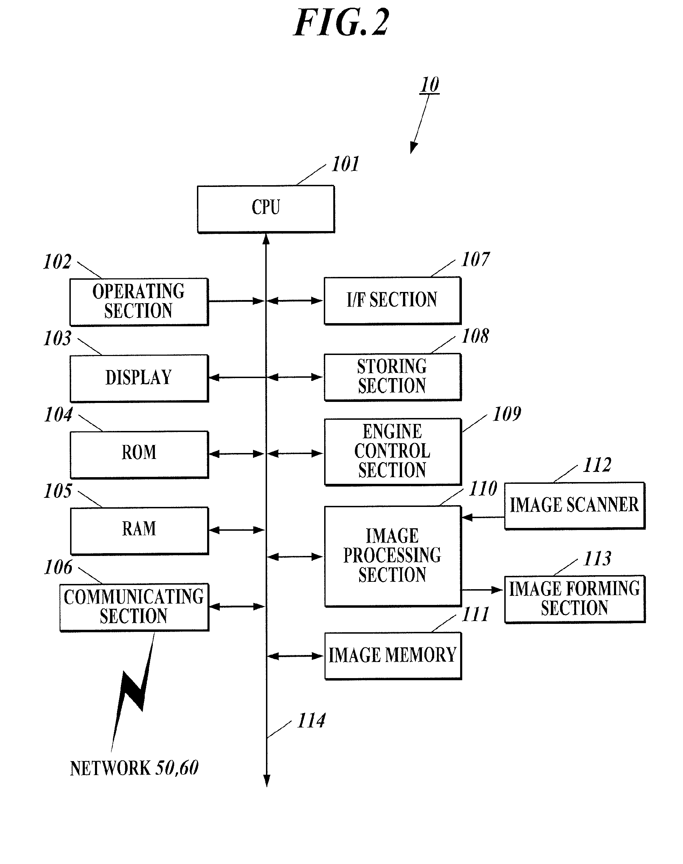

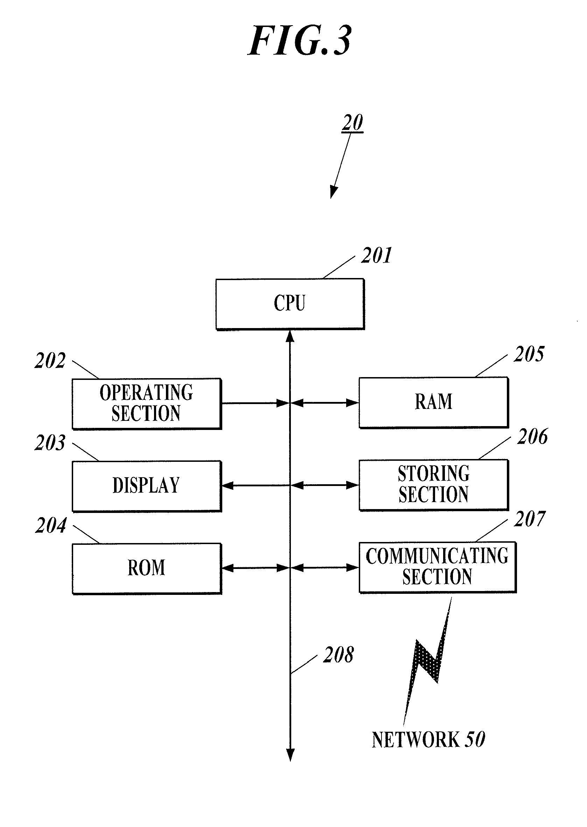

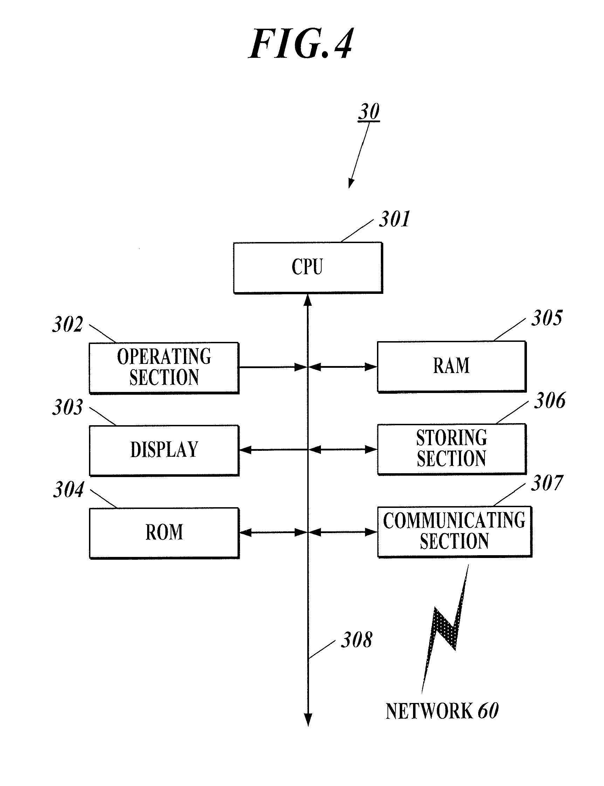

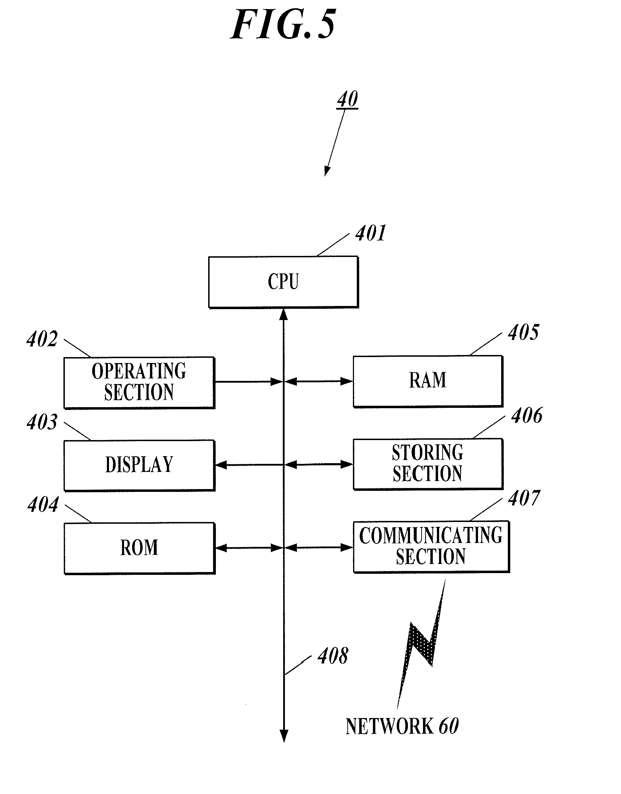

First, a configuration of an image processing system 100 of the present embodiment is described with reference to FIGS. 1 to 5. FIG. 1 shows a configuration of the image processing system 100. FIG. 2 shows an internal configuration of an MFP (Multi Function Printer/Peripheral) 10. FIG. 3 shows an internal configuration of a personal computer 20. FIG. 4 shows an internal configuration of a CA (Certification Authority) server 30. FIG. 5 shows an internal configuration of a TSA (Time Stamp Authority) server 40.

As shown in FIG. 1, the image processing system 100 according to the present embodiment has the MFP 10 as an image forming apparatus, the personal computer 20, the CA server 30 and the TSA server 40. The MFP 10 and the personal computer 20 are mutually communicably connected through a network 50. The MFP 10, the CA server 30 and the TSA server 40 are mutually communicably connected through a network 60. The types and number of devices connected to the network 50 and the network 60 are not limited to an example shown in FIG. 1. Further, the MFP 10 may be directly connected (locally connected) to the personal computer 20 and devices without the network 50.

The MFP 10 is an image forming apparatus that receives electronic data transmitted from the personal computer 20 and records (prints) images of the received electronic data in a predetermined recording medium such as a printing paper. The electronic data used herein are data capable of being printed by the MFP 10. The electronic data include document data and image data.

FIG. 2 is a block diagram showing a configuration of the MFP 10 according to the present embodiment. In the figure, the MFP 10 has a CPU 101, a display 103, an operating section 102, a ROM 104, a RAM 105, a communicating section 106, an I/F section 107, a storing section 108, an engine control section 109, an image processing section 110, an image memory 111, an image scanner 112 and an image forming section 113. The respective sections are connected through a bus 114.

The CPU 101 implements central control of the respective sections of the MFP 10. The CPU 101 reads out, from the ROM 104 or the storing section 108, a program that is specified from among system programs and various application programs stored in the storing section 108 and develops the program in the RAM 105. Then, the CPU 101 executes various processes in cooperation with the program developed in the RAM 105.

More specifically, in the after-mentioned electronic signature attaching process, the CPU 101 attaches an electronic signature to the image data scanned by the image scanner 112. Further, in the after-mentioned image forming process, the CPU 101 determines originality of the electronic signature attached to the electronic data as a print object transmitted from the personal computer 20. Based on the determination results, the CPU 101 controls the image processing section 110 and the image forming section 113 to record images of the electronic data in a recording medium.

The operating section 102 has input keys. The section 102 receives, as an input signal, information operated and inputted from users and outputs the input signal to the CPU 101. The display 103 is composed of an LCD (Liquid Crystal Display). The display 103 displays various kinds of information based on display signals from the CPU 101. Further, the display 103 may be integrated with the operating section 102 to form a touch panel.

The ROM 104 stores data for the execution of programs required for the operation of the MFP 10. The RAM 105 develops, in a program storage area, various programs executed by the CPU 101. Further, the RAM 105 temporarily stores, in a work area, data such as process results produced during the execution of the various programs.

The communicating section 106 is a MODEM (Modulator/DEModulator), a Terminal Adapter or a LAN adapter. Under the control of the CPU 101, the section 106 performs information communication control among other devices connected to the network 50 and the network 60. Specifically, the section 106 receives print data transmitted from the personal computer 20 and stores the data in the RAM 105 or the storing section 108.

The I/F section 107 is a communication interface for performing data communication with other devices. The section 107 is composed of, for example, USB (universal serial bus), IEEE 1284, IEEE 1394 or PCMCIA.

The storing section 108 has a nonvolatile recording medium such as an HDD (Hard Disk Drive). The section 108 stores data for the execution of programs required for the operation of the MFP 10. The storing medium may be formed to have a configuration capable of being mounted in a freely detachable and attachable way, which is composed of a magnetic or optical recording medium, or a semiconductor memory. Further, the section 108 stores electronic data capable of direct printing, such as PDF (Portable Document Format) data transmitted from the personal computer 20. Further, the section 108 previously stores a secret key and public key of the MFP 10 itself, or of its owner or of its membership of professional institutions.

Under the control of the CPU 101, the engine control section 109 totally controls operations of the image forming section 113 related to image formation (printing).

Under the control of the CPU 101, the image processing section 110 creates printing image data (bit map data) for each page from the print data stored in the RAM 105 or storing section 108. When the electronic data are data capable of direct output, such as PDF data, the image processing section 110 analyses document structure information of the PDF data stored in the storing section 108 to create image data for each page. Further, the image processing section 110 allows image memory 111 to store the printing image data.

The image memory 111 is composed of an SDRAM (Synchronous Dynamic Random Access Memory). The memory 111 stores electronic data as a printing output object, such as image data scanned by the image scanner 112 and electronic data received through the communicating section 106.

The image scanner 112 has a scanner below a contact glass on which a manuscript is placed. The scanner 112 scans images of the manuscript. The scanner is composed of a light source, a CCD (Charge Coupled Device) and an image sensor. The scanner forms images of light reflected by illumination and scanning from the light source to the manuscript and photoelectrically converts the images to scan the images of the manuscript. Then, the scanner converts the scanned images into digital image data using an A/D converter and outputs the data to the image processing section 110. Herein, the images are not limited to image data such as figures or photos. The images include text data such as characters or symbols.

The image forming section 113 is a printer using an ink-jet, a laser, a thermal-transfer or a dot impact system. The section 113 forms images on the recording medium and records the images in the medium such as a recording chart based on the image data inputted from the CPU 101.

The personal computer 20 is described below with reference to FIG. 3.

The computer 20 is a terminal device used by users. The computer 20 can transmit the image data as a print object to the MFP 10 through the network 50. As shown in FIG. 3, the personal computer 20 has a CPU 201, an operating section 202, a display 203, a ROM 204, a RAM 205, a storing section 206 and a communicating section 207. The respective sections are connected through a bus 208.

The CPU 201 implements central control of the respective sections of the personal computer 20. The CPU 201 reads out, from the ROM 204 or the storing section 206, a program that is specified from among system programs and various application programs stored in the storing section 206 and develops the program in the RAM 205. Then, the CPU 201 executes various processes in cooperation with the program developed in the RAM 205.

More specifically, based on the electronic data as a print object, the CPU 201 creates print data described in a page-description language such as PostScript® analyzable in the MFP 10, in cooperation with a printer driver installed in the storing section 206. Then, the CPU 201 transmits the print data to the MFP 10. Further, when the MFP 10 can directly print the electronic data such as PDF data as a print object (hereinafter, referred to as a PDF direct printing), the CPU 201 transmits the electronic data as a print object to the MFP 10.

Further, when the electronic signature is attached to the electronic data as a print object, the CPU 201 transmits, to the MFP 10 in the same manner as described above, the electronic data to which the electronic signature is attached. When the electronic data are converted into print data, the CPU 201 transmits to the MFP 10 the print data and the electronic data to which the electronic signature is attached, while making them correspond to each other. As a result, a corresponding relationship between the print data and the electronic signature can be kept.

The operating section 202 has input keys. The section 202 receives, as an input signal, information operated and inputted from users and outputs the input signal to the CPU 201. The display 203 is composed of an LCD (Liquid Crystal Display). The display 203 displays various kinds of information based on display signals from the CPU 201.

The ROM 204 stores data for the execution of programs required for the operation of the personal computer 20. The RAM 205 develops, in a program storage area, various programs executed by the CPU 201. Further, the RAM 205 temporarily stores, in a work area, data such as process results produced during the execution of the various programs.

The storing section 206 has a nonvolatile recording medium such as an HDD. The section 206 stores electronic data as a print object. The storing medium may be formed to have a configuration capable of being mounted in a freely detachable and attachable way, which is composed of a magnetic or optical recording medium, or a semiconductor memory. Further, in the section 206, exclusive software for the execution of the PDF direct printing is installed in addition to the above-described printer driver for the execution of image formation.

The communicating section 207 is a MODEM (Modulator/DEModulator), a Terminal Adapter or a LAN adapter. Under the control of the CPU 201, the section 207 performs information communication control among other devices connected to the network 50 and the network 60. Specifically, the section 207 transmits print data to the personal computer 20 through the network 50.

The CA server 30 is described below with reference to FIG. 4.

The CA server 30 is a public CA. Based on the certificate request information transmitted from the MFP 10 through the network 60, the CA server 30 issues an electronic certificate of the MFP 10.

As shown in FIG. 4, the CA server 30 has a CPU 301, an operating section 302, a display 303, a ROM 304, a RAM 305, a communicating section 307 and a storing section 306. The respective sections are connected through a bus 308.

The CPU 301 implements central control of the respective sections of the CA server 30. The CPU 301 reads out, from the ROM 304 or the storing section 306, a program that is specified from among system programs and various application programs stored in the storing section 306 and develops the program in the RAM 305. Then, the CPU 301 executes various processes in cooperation with the program developed in the RAM 305. Specifically, when receiving the certificate request information transmitted from the MFP 10, the CPU 301 issues the previously registered electronic certificate of the MFP 10 and transmits the certificate to the MFP 10. Herein, the issued electronic certificate may contain information stipulated by the X.509 of the ITU-T (International Telecommunication Union-Telecommunication Standardization Sector) recommendations, such as a version of the certificate, a serial number of the certificate and an issuing agency of the certificate. Further, the electronic certificate may contain a public key as a certification object.

The operating section 302 has input keys. The section 302 receives, as an input signal, information operated and inputted from users and outputs the input signal to the CPU 301. The display 303 is composed of an LCD. The display 303 displays various kinds of information based on display signals from the CPU 301.

The ROM 304 stores data for the execution of programs required for the operation of the CA server 30. The RAM 305 develops, in a program storage area, various programs executed by the CPU 301. Further, the RAM 305 temporarily stores, in a work area, data such as process results produced during the execution of the various programs.

The storing section 306 has a nonvolatile recording medium such as an HDD. The section 306 stores data for the execution of programs required for the operation of the CA server 30, or printing image data. Further, the storing section 306 previously stores, for each user, an electronic certificate that certifies authenticity of a secret key and a public key. In the present embodiment, the section 306 previously stores the electronic certificate of the MFP 10. Further, the storing section 306 previously stores the public key of each user that performs certification of the authenticity using the electronic certificate. In the present embodiment, the section 306 previously stores the public key of the MFP 10.

The communicating section 307 is a MODEM, a Terminal Adapter or a LAN adapter. Under the control of the CPU 301, the section 307 performs information communication control among other devices connected to the network 60. Specifically, the section 307 receives certificate request information transmitted from the MFP 10 and at the same time, transmits to the MFP 10 an electronic signature format corresponding to the certificate request information.

The TSA server 40 is described below with reference to FIG. 5.

The TSA server 40 is a public CA. Based on the certificate request information transmitted from the MFP 10 through the network 60, the TSA server 40 issues a time stamp used for electronic authentication.

As shown in FIG. 5, the TSA server 40 has a CPU 401, an operating section 402, a display 403, a ROM 404, a RAM 405, a storing section 406 and a communicating section 407. The respective sections are connected through a bus 408.

The CPU 401 implements central control of the respective sections of the TSA server 40. The CPU 401 reads out, from the ROM 404 or the storing section 406, a program that is specified from among system programs and various application programs stored in the storing section 406 and develops the program in the RAM 405. Then, the CPU 401 executes various processes in cooperation with the program developed in the RAM 405.

Specifically, when receiving a hash value of data as a signature attaching object transmitted from the MFP 10, the CPU 401 subjects the hash value and time information in receiving the hash value to the encryption process using a secret key (hereinafter, referred to as a TSA secret key) for the electronic signature to thereby create the electronic signature. Further, the CPU 401 transmits the electronic signature as a time stamp to the MFP 10. The time stamp created herein contains at least positional information indicating the position of the TSA server 40 itself, such as an IP address or identifier thereof.

Further, when receiving from the MFP 10 a signal requiring a public key (hereinafter, referred to as a TSA public key) corresponding to the TSA secret key, the CPU 401 transmits the TSA public key to the MFP 10.

The operating section 402 has input keys. The section 402 receives, as an input signal, information operated and inputted from users and outputs the input signal to the CPU 401. The display 403 is composed of an LCD and displays various kinds of information based on display signals from the CPU 401.

The ROM 404 stores data for the execution of programs required for the operation of the TSA server 40. The RAM 405 develops, in a program storage area, various programs executed by the CPU 401. Further, the RAM 405 temporarily stores, in a work area, data such as process results produced during execution of the various programs.

The storing section 406 has a nonvolatile recording medium such as an HDD. The section 406 stores data for the execution of programs required for the operation of the TSA server 40, or printing image data. The storing medium may be formed to have a configuration capable of being mounted in a freely detachable and attachable way, which is composed of a magnetic or optical recording medium, or a semiconductor memory.

The communicating section 407 is a MODEM, a Terminal Adapter or a LAN adapter. Under the control of the CPU 401, the section 407 performs information communication control among other devices connected to the network 60. Specifically, the communicating section 207 receives a hash value of data as a signature attaching object transmitted from the MFP 10 and at the same time, transmits to the MFP 10 a time stamp created corresponding to the hash value.

The network 60 is composed of a LAN formed by connecting computers or network devices, or a WAN formed by connecting the LANs under the standard such as Ethernet (registered trademark), Token Ring or FDDI.

In the image processing system 100 according to the present embodiment, various protocols can be used for data communication protocols between the MFP 10 and the personal computer 20. For example, predetermined protocols capable of two-way communication, capable of establishment of a session for each job, and capable of transmission of data in an arbitrary part within a file, such as RAW (TCP/IP9100), LPR (Line Printer Remote) and IPP (Internet Printing Protocol) can be used. However, original protocols may be used.

The network 50 is, for example, a WAN (Wide Area Network). The network 50 may comprise a LAN (Local Area Network). Further, the network 50 may comprise a telephone line network, an ISDN (Integrated Services Digital Network) line network, a broad communication network, an exclusive line, a mobile communication network, a communication satellite line, a CATV (Community Antenna Television) line, an optical communication line, a radio communication line and an Internet service provider for connecting the lines and the line networks.

In the image processing system 100 according to the present embodiment, the data communication protocols between the MFP 10 and the CA server 30 as well as between the MFP 10 and the TSA server 40 are not particularly limited. For example, a protocol considering security, such as TLS/SSL, S/MIME and IP sec, is preferably used. However, original protocols may be used.

An outline of operations of the image processing system 100 is described below.

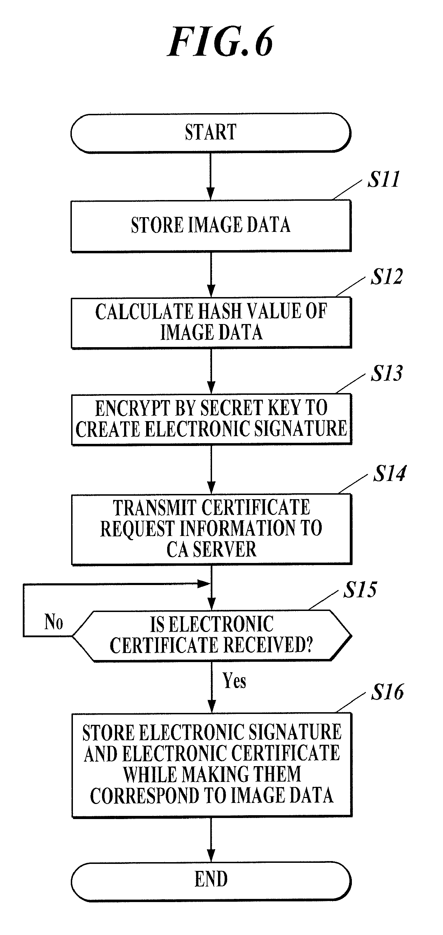

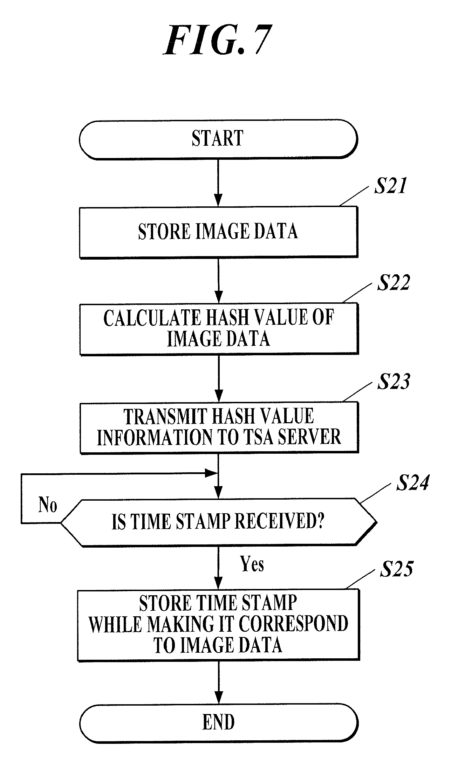

First, procedures of the electronic signature attaching process of the MFP 10 according to the present embodiment are described with reference to FIGS. 6 and 7. FIG. 6 shows each process which is executed in cooperation with a predetermined program stored in the ROM 104 or the storing section 108, under the control of the CPU 101.

First, a manuscript as an electronic signature attaching object is scanned by the image scanner 112, and the scanned image data are stored in the image memory 111 (step S11). Further, a predetermined hash function is operated on the image data to calculate a hash value of the image data (step S12). The calculated hash value is encrypted by a secret key to create an electronic signature (step S13). The hash value is a value operated by the hash function as a one-way function, such as an MD 5 (Message Digest 5). In the one-way function, it is easy to convert a certain input value to find an output value; however, it is difficult and impossible to calculate a value in a direction opposite to the above case.

Next, certificate request information is transmitted to the CA server 30 (step S14). A standby operation is performed until an electronic certificate is received from the CA server 30 (step S15). Herein, when it is determined that the electronic certificate is received (step S15; Yes), the electronic signature and the electronic certificate are stored while being made to correspond to the image data stored in the storing section 108 (step S16). Thus, the process is completed.

Herein, the electronic signature and the electronic signature information may be attached to a header of the image data, or may be stored as other data different from the image data while being made to correspond to the image data. Further, a public key corresponding to a secret key used in creating the electronic signature may be stored while being made to correspond to the electronic signature.

Next, procedures of the electronic signature attaching process using a time stamp are described with reference to FIG. 7. FIG. 7 shows each process which is executed in cooperation with a predetermined program stored in the ROM 104 or the storing section 108, under the control of the CPU 101.

First, a document as an electronic signature attaching obj ect is scanned by the image scanner 112, and the scanned image data are stored in the image memory 111 (step S21). Further, a predetermined hash function is operated on the image data to calculate a hash value of the image data (step S22).

Next, hash value information showing the hash value produced in step S22 is transmitted to the TSA server 40 (step S23). A standby operation is performed until a time stamp is received from the TSA server 40 (step S24). Herein, when it is determined that the time stamp is received (step S24; Yes), the time stamp is stored while being made to correspond to the image data stored in the storing section 108 (step S25). Thus, the process is completed.

The time stamp may be attached to a header of the image data, or may be stored as other data different from the image data while being made to correspond to the image data. Further, the time stamp may be arranged, on the image data, as an icon image containing electronic signature information as a hyperlink.

Thus, the electronic signature can be attached to the image data scanned by the image scanner 112, and therefore, the image data having the electronic signature can be easily created.

In this process, the electronic signature is attached to the image data scanned by the image scanner 112. However, the present invention is not limited thereto. For example, the electronic signature may be attached to the electronic data inputted through the communicating section 106. Further, the electronic signature may be attached to the electronic data inputted through the I/F section 107.

In this process, the electronic certificate is obtained from the CA server 30. However, the present invention is not limited thereto. Only the electronic signature created by the MFP 10 itself may be attached to the image data.

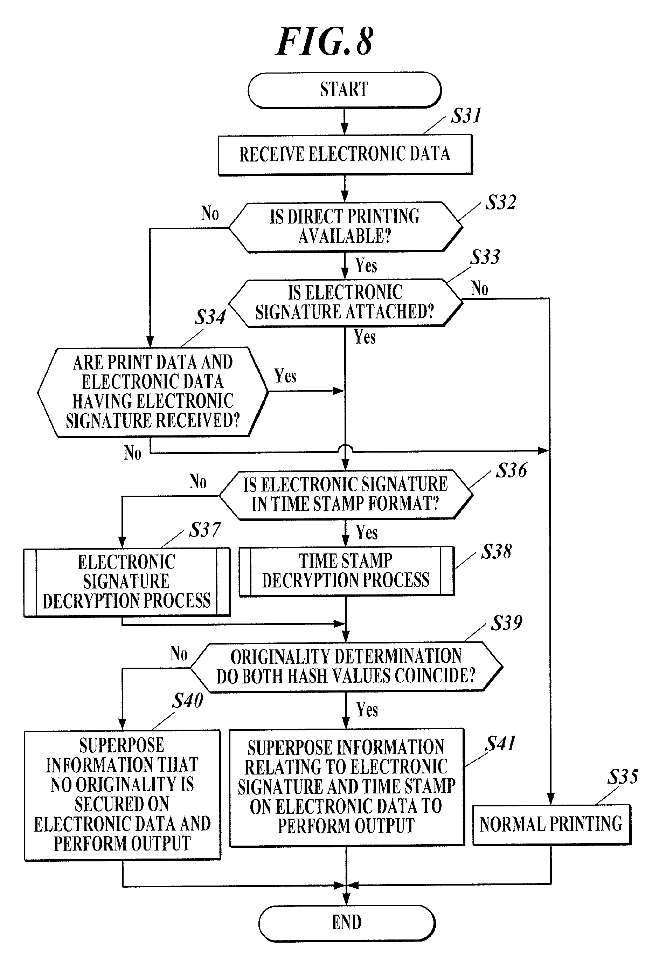

Next, procedures of the image forming process of the MFP 10 according to the present embodiment are described with reference to FIGS. 8 to 11. FIG. 8 shows each process which is executed in cooperation with a predetermined program stored in the ROM 104 or the storing section 108, under the control of the CPU 101. Further, the electronic data as a print object in this process may be image data created by the above-described electronic signature attaching process or may be electronic data to which the electronic signature is attached by other devices or methods.

First, when the electronic data as a print object are received from the personal computer 20 through the communicating section 106 (step S31), it is determined whether the electronic data are data capable of direct printing, such as PDF data, on the basis of data structure and header information of the electronic data (step S32).

Herein, when it is determined that the electronic data are data capable of direct printing (step S32; Yes), it is determined whether the electronic signature is attached to the electronic data (step S33). Herein, when it is determined that no electronic signature is attached to the electronic data (step S33; No), normal direct printing is performed by the image forming section 113 (step S35). Thus, the process is completed. Further, in step S33, when it is determined that the electronic signature is attached to the electronic data (step S33; Yes), the process proceeds to step S36.

On the other hand, in step S32, when it is determined that the electronic data are data incapable of direct printing, that is, when the data are print data described in a page-description language (step S32; Yes), the electronic data used as the basis for creation of the print data are received together with the print data and at the same time, it is determined whether the electronic signature is attached to the electronic data (step S34). Herein, when it is determined that the electronic data are not received (step S34; No), normal printing is performed by the image forming section 113 (step S35). Thus, the process is completed. Further, in step S34, when it is determined that the electronic data are received (step S34; Yes), the process proceeds to step S36.

Next, in step S36, it is determined whether the electronic signature attached to the electronic data is in a time stamp format. When it is determined that the signature is not in a time stamp format (step S36: No), the process proceeds to an electronic signature decryption process of step S37.

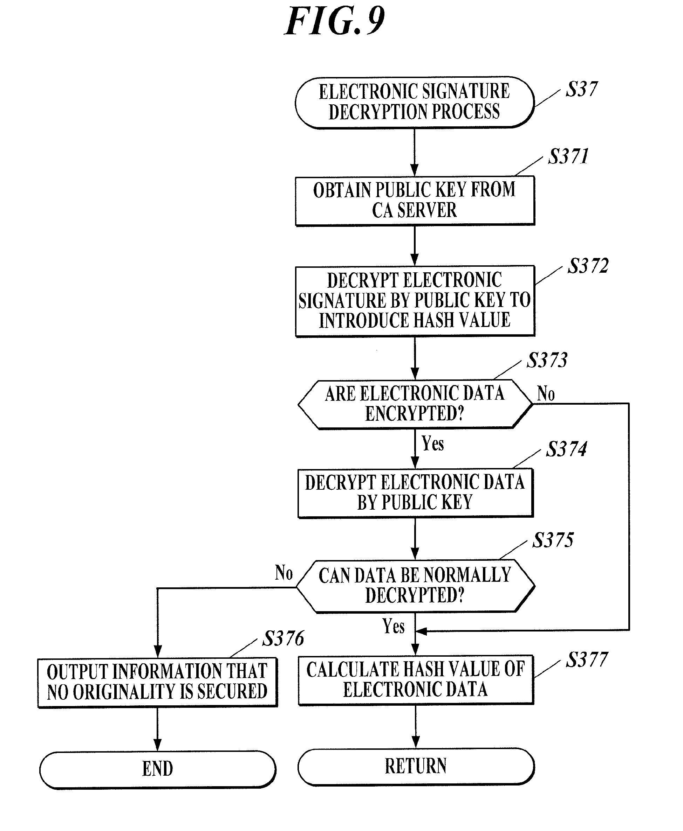

The electronic signature decryption process of step S37 is described below with reference to FIG. 9.

First, a public key from the CA server 30 of the issuing agency is obtained based on information on the issuing agency of the electronic certificate, which is contained in the certificate (step S371). Using the public key, the decryption of the electronic signature is performed to introduce a hash value (step S372) When the electronic certificate or the electronic signature contains the public key, the decryption of the electronic data is performed based on the public key contained in the electronic certificate or the electronic signature without performing connection to the CA server 30.

Subsequently, it is determined whether the electronic data are encrypted. When it is determined that the data are not encrypted (step S373; No), the process proceeds to step S377. Further, when it is determined that the electronic data are encrypted (step S373; Yes), the decryption of the electronic data is performed using the public key obtained in step S371 (step S374).

Next, the decryption result is determined. When it is determined that the electronic data cannot be normally decrypted (step S375; No), information indicating that no originality of the electronic data is secured, for example, the electronic data or the electronic signatures are suspected of being falsified is recorded in the recording medium by the image forming section 113 (step S376). Thus, the process is completed. Further, when it is determined that the electronic data can be normally decrypted (step S375; Yes), the process proceeds to step S377. In step S377, the hash function is operated on the electronic data described in plain language to calculate the hash value (step S377). Then, the process proceeds to step S39 of FIG. 8.

Returning now to FIG. 8, in step S36, when it is determined that the electronic signature attached to the electronic data is in a time stamp format (step S36; Yes), the process proceeds to a time stamp decryption process of step S38.

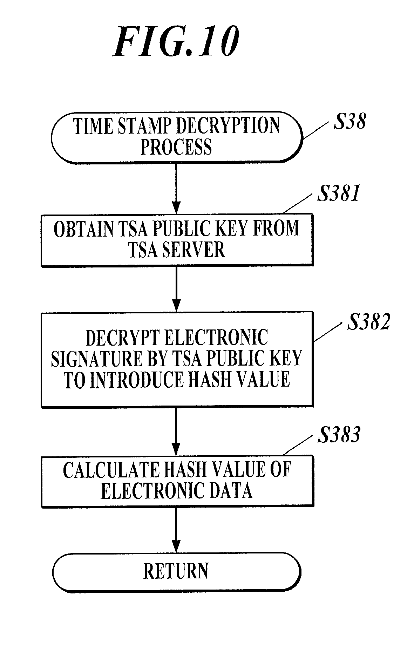

The time stamp decryption process of step S38 is described below with reference to FIG. 10.

First, connection to the TSA server 40 is performed based on positional information contained in the time stamp. Then, the TSA public key corresponding to the TSA secret key used for the electronic signature is obtained from the TSA server 40 (step S381). Further, the decryption of the electronic signature is performed using the TSA public key to introduce the hash value (step S382). When the time stamp contains the TSA public key, the decryption of the electronic signature is performed based on the public key contained in the time stamp without performing connection to the TSA server 40.

Subsequently, the hash function is operated on the electronic data to calculate the hash value (step S383). Then, the process proceeds to step S39 of FIG. 8.

Returning now to FIG. 8, in step S39, comparison between a hash value introduced from the electronic authentication or the time stamp and a hash value calculated from the electronic data is performed to verify originality of the electronic data. Herein, when it is determined that both of the hash values are different from each other (step S39; No), information indicating that no originality of the electronic data is secured, for example, the electronic data or the electronic signatures are suspected of being falsified is superposed on the electronic data by the image processing section. Then, the superposed electronic data are recorded in the recording medium by the image forming section 113 (step S40). Thus, the process is completed.

Further, in step S39, when it is determined that both of the hash values are the same (step S39; Yes), information on the electronic signature is superposed on the electronic data by the image processing section. Then, the superposed electronic data are recorded in the recording medium by the image forming section 113 (step S41). Thus, the process is completed.

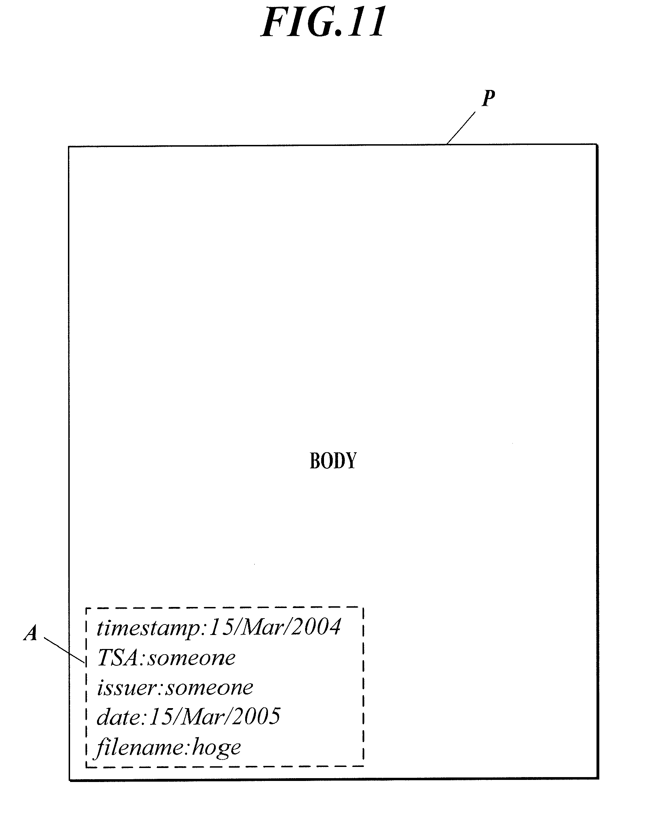

FIG. 11 shows one example of information contained in the electronic data and time stamp which are recorded in the recording medium P by the process.

As shown in FIG. 11, information (information within a region A in the figure) superposed on the electronic data (body) and contained in the time stamp is recorded. A position on the recording medium where information contained in the time stamp is recorded is not particularly taken notice of. Accordingly, since information on the determination results of the originality is superposed on the electronic data and recorded in the recording medium, contents of the electronic data as well as the originality determination results of the electronic data can be easily checked.

As described above, according to the MFP 10 of the first embodiment, the securement of originality of the electronic data as a print object is determined and image formation is performed based on the determination results. Therefore, the printing of the electronic data can be easily performed.

Further, the securement of originality of the print data as a print object is determined based on the electronic data used as the basis for creation of the print data and based on the electronic signature attached to the electronic data. Then, the image formation is performed based on the determination results. Therefore, the printing of the print data can be easily performed.

Because the information on the determination results is printed on the recording medium, the originality determination results of the electronic data can be easily checked.

Because the information on the electronic signature is printed on the recording medium, the information on the electronic signature can be easily checked.

Detail configurations and detail operations of the image forming apparatus in the above embodiment can be suitably changed within a scope not departing from the purpose of the present invention.

In the above embodiment, for example, the originality of the electronic data is determined by the MFP 10. Further, when the originality thereof can be determined by the CA server 30 or the TSA server 40, the determination results produced by the CA server 30 or the TSA server 40 may be received through the communication section 106 and then, the electronic data may be recorded in the recording medium based on the determination results.

Further, in the above embodiment, information on the determination results of the originality is superposed on the electronic data and printed out on the recording medium. However, the present embodiment is not limited thereto. The electronic data and the information on the determination results may be each outputted to the separate recording media. Further, the determination results of the originality may be displayed on the display 103.

Further, in the above embodiment, determination of the electronic certificate issued from the CA server 30 is not performed. However, the present embodiment is not limited thereto. Determination of authenticity of the electronic certificate may be performed by the CA server 30 to obtain the determination results. Further, the public key corresponding to the secret key for creation of an electronic certificate, which is used in creating the certificate, may be obtained from the CA server 30 to determine the authenticity of the electronic certificate. In this case, it is preferred that the information on the determination results is superposed on the electronic data. Further, when the CA server 30 supports the offer of CRL (Certificate Revocation List) service or OCSP (Online Certificate Status Protocol) service, expiration of validity of the electronic certificate may be determined based on the CRL or OCSP service. In this case, it is preferred that the information on the determination results is superposed on the electronic data.

Further, in the above embodiment, when, as a result of the originality determination, the originality is not kept, the result is superposed on the electronic data and recorded in the recording medium. However, the present embodiment is not limited thereto. Control operation may be performed not to allow printing of the electronic data.

Further, in the above embodiment, a case of transmitting the electronic data as a print object from the personal computer 20 to the MFP 10 is described. However, the present embodiment is not limited thereto. Further, the present embodiment is applicable also to a case of specifying a storage position of the electronic data to be printed by the MFP 10 to obtain the electronic data from a storage device that stores the electronic data to be printed and then print the data by the MFP 10.

Further, in the above embodiment, description is made by taking as an example the MFP for the image processing apparatus which is a multifunctional peripheral device having a print function, such as a digital copying machine or a facsimile machine. However, the present embodiment is not limited thereto. The image processing device used herein may be a printer which is an SFP (Single-Function Printer).

The image forming apparatus and image forming method according to the present invention can be realized by using an exclusive hardware circuit for the execution of each of the above procedures as well as by allowing the CPU to execute programs in which each of the above procedures is described. In the case of realizing the present invention by the latter method, the program for operating the image forming apparatus may be provided by a computer readable recording medium such as a floppy (registered trademark) disk or a CD-ROM, or may be provided by online services through a network such as the Internet. In this case, the program recorded in the computer readable recording medium is normally transferred to and stored in a ROM or a hard disk. Further, the program may be provided, for example, for independent application software, or may be integrated, as one function of the image forming apparatus, into software of the apparatus.

The present application is based on the entire disclosure, including the specification, claims, drawings, and abstract, of Japanese Patent Application No. Tokugan 2005-189663 filed with Japan Patent Office on June 29, 2005.

## Claims

1. An image forming apparatus, comprising:
a storing section for storing electronic data for printout and an electronic signature attached to the electronic data;
an image forming section for printing the stored electronic data on a predetermined recording medium; and
a control section for decrypting the stored electronic signature, for determining whether originality in the electronic data is secured based on a decryption result, and for controlling the image forming section based on the determination result.

2. The apparatus of claim 1, wherein:
the control section allows information relating to the determination result to be printed on the recording medium.

3. The apparatus of claim 1 or 2, wherein:
the control section allows the information relating to the determination result to be superposed on the electronic data and to be printed on the recording medium.

4. The apparatus of any one of claims 1 to 3, wherein:
the control section allows information relating to the electronic signature to be printed on the recording medium when it is determined that the originality is secured.

5. The apparatus of claim 1, further comprising:
an obtaining section for externally obtaining decryption key information for decrypting the electronic signature,
wherein:
the control section decrypts the electronic signature based on the obtained decryption key information.

6. An image forming apparatus, comprising:
a storing section for storing original data, an electronic signature attached to the original data and electronic data for printout, which is created based on the original data, wherein the original data;
an image forming section for printing out the stored electronic data on a predetermined recording medium; and
a control section for decrypting the stored electronic signature, for determining whether originality in the original data is secured based on a decryption result, and for controlling the image forming section based on the determination result.

7. The apparatus of claim 6, wherein:
the control section allows information relating to the determination result to be printed on the recording medium.

8. The apparatus of claim 6 or 7, wherein:
the control section allows the information relating to the determination result to be superposed on the electronic data and to be printed on the recording medium.

9. The apparatus of any one of claims 6 to 8, wherein:
the control section allows information relating to the electronic signature to be printed on the recording medium when it is determined that the originality is secured.

10. The apparatus of claim 6, further comprising:
an obtaining section for externally obtaining decryption key information for decrypting the electronic signature,
wherein:
the control section decrypts the electronic signature based on the obtained decryption key information.
